# EUROPEAN PATENT SPECIFICATION

(11) **EP 2 993 609 B1**
(45) Date of publication and mention of the grant of the patent: **05.04.2017**
(21) Application number: 14183117.2
(22) Date of filing: 02.09.2014
(51) Int. Cl.: G06F 21/86

(54) **Tamper proof electronic control unit**
Manipulationsgeschützte elektronische Steuereinheit
Unité de commande électronique inviolable

(43) Date of publication of application: 09.03.2016
(73) Proprietor: ASSA AB, 631 05 Eskilstuna (SE)
(72) Inventor: COLLIN, Kjell, 632 32 ESKILSTUNA (SE)
(74) Representative: Kransell & Wennborg KB

(56) References cited:
- WO-A2-2007/021729
- DE-A1-102008 003 264
- FR-A1- 2 860 643
- US-A1- 2011 279 279
- US-A1- 2012 018 288

## Description

### Technical field

The invention relates generally to a tamper or manipulation protection for an electronic control unit, for example for control of an electronic lock and/or an access control system. The invention may also be used at electronic control units in other areas of application where it is important to prevent unauthorized manipulation of the control electronics.

### Background

Electronic control units are used in many different technical fields for electrical control of a process, a machine, a device, an arrangement or the like. Typically, the unit comprises some kind of enclosure, such as a box, in which the electronic circuits, normally arranged at a printed circuit board, are enclosed. The enclosure typically comprises an openable lid or the like for allowing access to the electronic circuit by authorized personnel in case of maintenance, repair and replacement of the electrical components. The unit may be fixable to a support surface which, in some instances may be arranged at the device which is to be controlled. At other instances the support surface may be a wall, a bracket, a stand or the like arranged in proximity to or at a larger distance from the device to be controlled.

Especially when the electronic control unit is used for control of safety or security arrangements it is of great importance to prevent tampering, manipulation and removal of the control unit by unauthorized persons. Such manipulation and removal protection is e.g. important when the control unit is used for controlling electronic door locks, access control systems and the like.

### Prior art

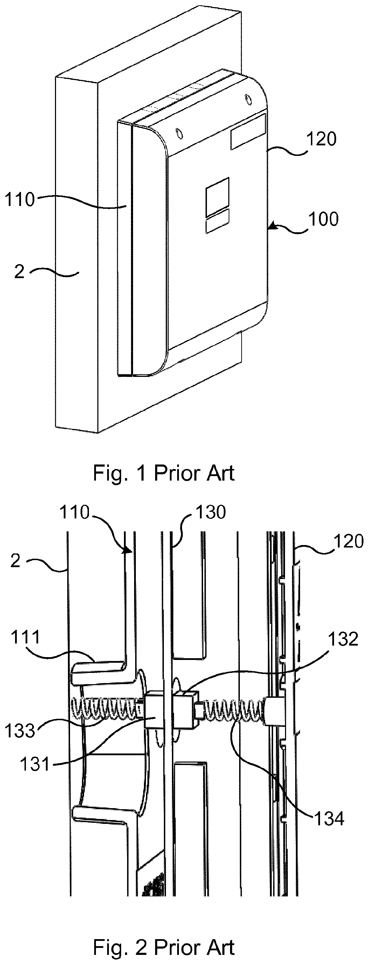

Figures 1 and 2 show a previously known electronic control unit used for controlling electro-mechanical door locks. The unit comprises a base member 110 and a removable lid 120 which together enclose an interior space. The base member is fixable to a support surface such as a wall 2, by means of fixation screws (not shown) which are accessible from the inside of the unit, when the lid has been removed. A printed circuit board (PCB) 130 is arranged in the interior space and attached to the base member 110. The PCB comprises a number of electronic components for the control of the electro-mechanical door lock (not shown) and is connected thereto by wires (not shown).

In order to prevent unauthorized manipulation and removal of the control unit 100, the PCB is provided with a first 131 and a second 132 micro-switch. The first micro-switch 131 is fixed to the wall facing inside of the PCB 130. The second micro-switch 132 is fixed to the lid facing outside of the PCB 130. A first actuator 133, in the form of a compression spring, is attached to the first micro-switch 131 and arranged such that its free end bears against the wall 1, when the base member 110 is fixed to the wall 1. When the base member 110 is mounted to the wall and the first actuator 133 abuts the wall 1, the first micro-switch 131 is depressed, whereby the control electronics receives a signal indicating that normal operational mode prevails. In order to further prevent tampering, the first actuator 133 is surrounded by a cylindrical collar 111, which forms part of the base member 110 and which extends in a direction towards the wall 1 when the base member 110 is mounted to the wall.

Similarly, a second actuator 134 is attached to the second micro-switch 132 and arranged such that its free end abuts the inside of the lid 120 when mounted. The second micro-switch 132 thus signals normal operation mode when the lid 120 is attached to the base member 110.

If the base member 110 would be removed from the wall 1 or if the lid 120 would be removed from the base member 110, the respective micro-switch 131, 132 is ejected and the control electronics is thereby given signal that a manipulation attempt is going on. The control electronics may for example be arranged such that the door lock is blocked in locked position and/or that the manipulation attempt is signalled at a remotely arranged monitoring centre when one of the micro-switches is triggered.

A problem at this prior art solution is that it has proved possible to remove the lid and the base member without triggering any of the micro-switches. It is for example possible to insert a thin object, such as a thin plate or a thickness gauge between the wall and the base part and / or between the lid and the base portion and to thereby press the respective actuator 133, 134 in the direction towards its micro-switch. Thereafter, it is possible to remove the base member or the lid without triggering the micro-switches.

### Summary of the invention

It is therefore an object of the present invention to provide an enhanced electronic control unit.

Another object is to provide such an electronic control unit at which the risk of unauthorized manipulation or tampering is reduced.

It is a further object to provide such an electronic control unit at which any unauthorized removal of the electronic control unit or parts thereof may be detected with a high degree of certainty.

A still further object is to provide such an electronic control unit which is simple in construction and which comprises a low number of constituent parts.

Another object is to provide such an electronic control unit which is easy to install.

Still another object is to provide such an electronic control unit which is reliable in use.

Yet another object is to provide such an electronic control unit which may be manufactured at a comparatively low cost.

These and other objects are achieved by an electronic control unit as set out in the preamble of claim 1, which control unit exhibits the special technical features as specified by the characterizing portion of said claim. The electronic control unit comprises a base member which is arranged to be fixed to a support surface and a cover or an openable lid which, together with the base member, encloses an interior space which space accommodates an electronic control circuit. The electronic control circuit comprises at least one manipulation detecting component which is arranged to generate an electric signal when the base member is removed from the support surface or the lid is opened. An actuator is arranged between the manipulation detecting component and the support surface or the lid. A protective sleeve is either arranged to be fixed to the support surface or is fixed the lid. The protective sleeve comprises a sleeve portion which is arranged to surround the actuator and at least a portion of the manipulation detecting component when the base member is fixed to the support surface or when the lid is closed respectively.

The inventive protective sleeve greatly reduces the risk of the electronic control unit being manipulated. In cases where the manipulation detecting component is arranged to detect removal of the base member from the supporting surface the protective sleeve, which surrounds the actuator, is fixed to the support surface. Even if it would be possible to insert a thin objet between the free end of the actuator and the support surface, the fact that the protective sleeve is fixed to the support surface, makes it impossible to continuously press the actuator towards the manipulation detection component during removal of the base member from the support surface. Hereby it is not possible remove the base without activating the manipulation detection component. In cases where the manipulation detecting component is arranged to detect opening or removal of the lid from the base member, the fixation of the protective sleeve to the lid, in a corresponding manner, prevents continuous depression of the actuator towards the manipulation detection component during removal of the lid from the base member.

Additionally, the fact that the protective sleeve at least partially surrounds the manipulation detecting component prevents a thin object or the like to be inserted between the actuator and the manipulation detection component to thereby prevent triggering of the manipulation detection component during removal of the base member from the support surface or the lid from the base member.

The inventive protective sleeve thus provides an simple but yet very effective means for preventing unauthorized removal of the electronic control unit or its lid.

The actuator may comprise a first end arranged in contact with the manipulation detecting component and a second end being arranged distal to the first end.

The protective sleeve may comprise a bottom wall which forms a support surface for the second end of the actuator. Hereby, access to the free end of the actuator is prevented even further.

The sleeve portion of the protective sleeve may extend from the bottom wall.

The actuator may be resilient. Hereby the manufacturing tolerances of the constituent parts of the electronic control unit may be reduced while still ensuring a reliable functioning of the manipulation detection component.

The actuator may be formed of a compression spring. This entails for a simple and still reliable construction which may be produced at low cost.

When the electronic control unit comprises an openable lid, the electronic control unit may also comprise a first manipulation detecting component, a first protective sleeve which is arranged to be fixed to the support surface and a first actuator arranged between the first manipulation detecting component and the first protective sleeve as well as a second manipulation detecting component, a second protective sleeve which is fixed to the lid and a second actuator arranged between the second manipulation detection component and the second protective sleeve. By this means manipulation by removal of the base member from the support surface and opening or removal of the lid from the base member are both prevented.

The manipulation detection component may comprise a micro-switch. This entails for a simple, cost effective and yet reliable realization of the invention.

In case where a manipulation detection component is arranged to detect removal or opening of the lid, the corresponding protective sleeve may be formed integral with the lid.

The electronic control unit may comprise a printed circuit board which is fixed to the base member and onto which the manipulation detecting component is attached.

The base member may comprise a cylindrical flange which extends towards the support surface and which at least partially surrounds the protective sleeve when the base member is fixed to the support surface. Hereby a sort of labyrinth protection is achieved which further prevents access to the actuator and/or the manipulation detection component.

The lid may be openable either by being arranged removable from the base member or by being hinged to the base member.

Further objects and advantages of the invention appear from the following detailed description of embodiments and from the appended claims.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### Brief description of the drawings

The invention is now described, by way of example, with reference to the accompanying drawings, in which:
Fig. 1 is a perspective view illustrating an electronic control unit according to the prior art and being fixed to a wall.
Fig. 2 is a perspective view illustrating a partial section through the prior art arrangement shown in fig. 1.
Fig. 3 is a section through an electronic control unit according to an embodiment of the invention and illustrates the electronic control unit attached to a wall and with the lid closed.
Fig. 4 is a section corresponding to fig. 3 and illustrates the electronic control unit when the lid has been opened.
Fig. 5 is a section corresponding to fig. 3 and illustrates the electronic control unit when the lid is closed and the base member is removed from the wall.
Fig. 6 is a perspective view in enlarged scale illustrating the electronic control unit shown in fig. 3, when the base member has been removed from the wall and the lid has been opened.
Fig. 7 is a perspective view corresponding to fig. 6 and illustrates the electronic control unit when the base member is fixed to the wall and the lid is closed.

### Detailed description of embodiments

The invention will now be described more fully hereinafter with reference to the accompanying drawings, in which a certain embodiment of the invention is shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

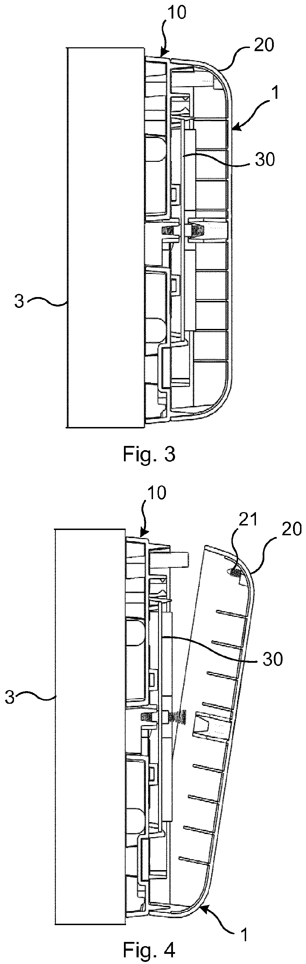

Figs. 3-7 illustrate an exemplifying embodiment of the electronic control unit 1 and a wall 3 which forms a support surface to which the electronic control unit may be fixed. The exemplifying electronic control unit 1 shown is arranged to control an electro-mechanical lock (not shown). For this purpose, the electronic control unit 10 is electrically connected to an electric striker (not shown) arranged in a door frame member which is fixed to the wall at a door opening. The electronic control unit 1 is fixed to the wall 3 in proximity to the door opening and may additionally be electrically connected to a key pad for entering an access code, an RFID reader or any other electronic authorization control device. Alternatively or in addition, the electronic control unit 10 may be connected, by wires or wirelessly, to a central monitoring and control station. The electronic control unit 1 may thus form part of a monitoring and control system comprising several local control units and one or more central stations. Any number of such local units and central stations may be provided with or constituted by an electronic control unit according to the invention.

The electronic control unit 1 comprises a base member 10 and a cover or lid 20. The base member 10 and the lid 20 are formed by injection moulding of a polymer material.

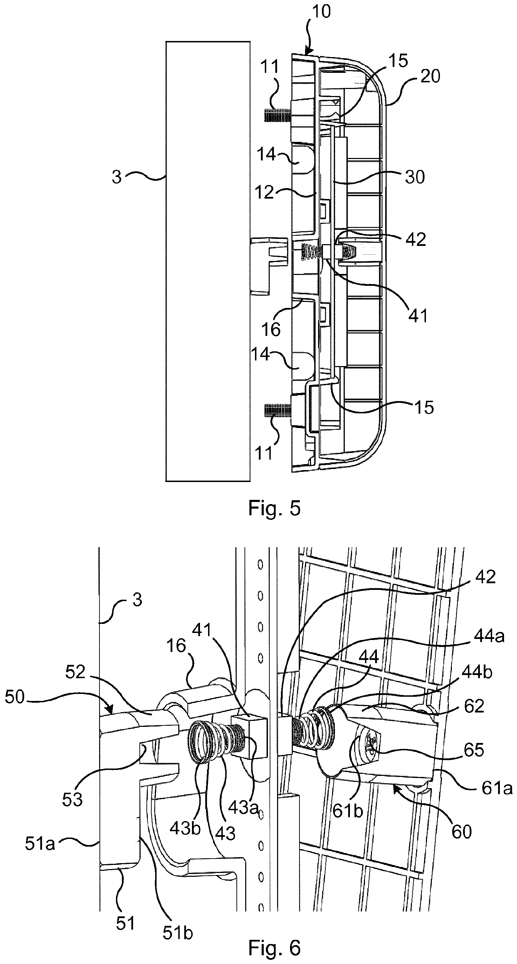

Fig. 5 illustrates first fixation screws 11 by means of which the base member 10 may be fixed to the wall 3. Fig. 3 illustrates a second fixation screw 21, by means of which the lid may be fixed to the base member 10. The base member 10 comprises a bottom wall 12 and a peripheral flange 13 which projects from the bottom wall 12 in the direction towards the wall 3. The peripheral flange 13 further extends along the entire circumferential edge of the bottom wall 12 such that it forms a continuous wall between the bottom wall 12 and the wall 3, when the base member is fixed to the wall. However, the peripheral flange 13 is provided with weakened material portions 14, for allowing through openings to be formed therein in cases where it is necessary to arrange wiring (not shown) through the peripheral flange 13. A number of resilient snap hooks 15 are formed integral with the bottom wall 12 and projects in the direction towards the lid 20. The base member 10 further exhibits a cylindrical hollow flange 16 which is formed integral with the bottom wall 12 and which projects therefrom in the direction towards the wall 3. The projecting distance of the cylindrical flange 16 is essentially equal or somewhat smaller to the projecting distance of the circumferential flange 13, such that the free end of the cylindrical flange 16 is arranged at or close to the wall 3, when the base member is fixed to the wall whereby the circumferential flange 13 rests against the wall 3.

When the lid 20 is fixed to the base member 10 and closed, the base member 10 and the lid 20 enclose an interior space. A printed circuit board (PCB) 30 is arranged in the interior space and fixed to the base member 10. In the shown example the PCB 30 is fixed to the base member by means of the snap hooks 15. As readily understood, the PCB 30 may however be fixed to the base member 10 in many different ways, such as by means of screws, adhesive or the like.

The PCB carries an electronic circuit for controlling the electronic striker and, where applicable, for communicating with an authorization control device and/or a central monitoring station. The electronic circuit further comprises a first 41 and a second 42 manipulation detection component.

The first manipulation detecting component 41 is attached to the PCB 30, at a surface which faces the bottom wall 12. The second manipulation detecting component 42 is attached to the PCB 30 at a surface which faces the lid 20. In the shown example, both the first 41 and second 42 manipulation detecting components are formed of a respective micro-switch which comprises a axially displaceable trigger (not shown). Both triggers are biased for axial displacement in a direction away from the PCB 13. The manipulation detecting components 41, 42 are arranged to signalling a normal state of operation when the respective trigger is maintained in a depressed position, i.e. when the respective trigger is pressed towards the PCB 30. The manipulation detecting components 41, 42 are further arranged to signalling a manipulation attempt if a respective trigger is ejected in the direction away from the PCB 13.

A first actuator 43 is arranged in contact with the first manipulation detection component 41. In the example shown, the first actuator 43 is constituted by a compression spring having a general direction of extension between a first end 43a and a second end 43b. The first end 43a is fixed to the trigger of the first manipulation detecting component 41 and its general direction of extension extends in parallel with the axial displacement direction of this trigger. The first manipulation detecting component 41 and the first actuator 43 are arranged such that the first actuator 43 and its second end 43b are received in the cylindrical flange 16.

The electronic control unit 1 further comprises a first protective sleeve 50 which is arranged to be fixed to the wall 3. In the shown example the protective sleeve 50 has been fixed to the wall by means of an adhesive. This fixation may however also be accomplished in other ways such as by means of fixation screws extending through the protective sleeve and into the wall 3. It may also be possible to mount the protective sleeve to a bracket or the like which has been securely fixed to the wall. The first protective sleeve 50 is arranged to be mounted to the wall such that it is positioned in line with the axial displacement direction of the first manipulation detecting components 42 trigger. The first protective sleeve 50 comprises a base portion 51 having a first surface 51a which is arranged to rest against the wall 3. The base portion 51 also exhibits a second surface 51b facing away from the first surface 51a. A hollow sleeve portion 52 projects from the second surface 51b, in the direction towards the bottom wall 12 of the base member 10. The hollow sleeve portion 52 has an internal bore, the width of which is somewhat larger than the outer diameter of the first actuator 43. The axial extension of the hollow sleeve portion 52 is arranged such that the entire first actuator 43 and a major portion of the first manipulation detecting component 41 is received in the bore when the base member 10 is fixed to the wall 3. A portion of the base portion's 51 second surface 51b is arranged within the sleeve portion 52, such that it forms a support surface 53 for the second end 43b of the first actuator 43.

A second actuator 44 is arranged in contact with the second manipulation detection component 42. In the example shown, the second actuator 44 is constituted by a compression spring having a general direction of extension between a first end 44a and a second end 44b. The first end 44a is fixed to the trigger of the second manipulation detecting component 42 and its general direction of extension extends in parallel with the axial displacement direction of this trigger.

The exemplifying electronic control unit 1 also comprises a second protective sleeve 60 which is fixed to the lid 20 by means of a screw 65. The second protective sleeve 60 may however also be fixed to the lid by other means such as by adhesive or it may be formed as an integral part of the lid, e.g. by injection moulding. The second protective sleeve 60 is arranged such that it is positioned in line with the axial displacement direction of the second manipulation detecting component's 42 trigger. The second protective sleeve 60 comprises a base portion 61 having a first surface 61a which rests against the inner surface of the lid 20. The base portion 61 also exhibits a second surface 61b facing away from the first surface 51a. A hollow sleeve portion 62 projects from the second surface 61b, in the direction towards the PCB 30. The hollow sleeve portion 62 has an internal bore, the width of which is somewhat larger than the outer diameter of the second actuator 44. The axial extension of the hollow sleeve portion 62 is arranged such that the entire second actuator 44 and a portion of the second manipulation detecting component 42 is received in the bore when the lid 20 closed and attached to the base member 10. The second surface 61b of the second protective sleeve 60 is arranged within the sleeve portion 62, such that it forms a support surface for the second end 44b of the second actuator 44.

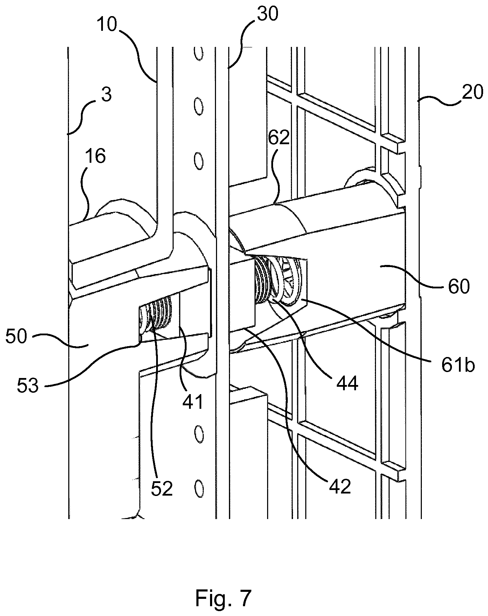

Fig. 7 illustrates the electronic control unit 1, when the base member is fixed to the wall 3 and the lid 20 is closed. At this position, second end 43b of the first actuator 43 rests against the support surface 53 of the first protective sleeve, such that the first actuator 43 is compressed and urges the trigger of the first manipulation detecting component 41 to its depressed position. Thereby, the first manipulation detecting component 41 signals a normal state of operation, not indicating any tamper attempt. Correspondingly, the second end 44b of the second actuator 44 rests against the support surface 61b of the second protective sleeve 60, thereby urging the trigger of the second manipulation detection component 42 to its depressed position. By this means, also the second manipulation detecting component 42 signals normal operation and the electronic control unit as well as the entire system functions as normal.

Fig. 6 illustrates the electronic control unit 1 when the lid 20 has been opened and the base member 10 removed from the wall 3. At this position both actuators 43, 44 have lost contact with their respective support surface 53, 61b, such that both actuators 43, 44 have been axially expanded and the respective trigger of the first 41 and second 42 manipulation detecting component have been axially displaced by internal biasing to their ejected triggering position. Thereby both the first 41 and the second 42 manipulation detecting components signal that a manipulation attempt is being carried out. Such signalling may in turn lead to that all locks communicating with the electronic control unit are blocked in the locked position and/or to that the manipulation attempt is announced at the electronic control unit or at any other control unit or monitoring station or the like communicating with the electronic control unit which is under attack.

Hence, the exemplifying electric control unit shown and described above is provided with an enhanced tamper protection for preventing removal both of the lid from the base member and of the base member from the support surface. The fact that both protective sleeves 50, 60 are fixed to a part which is movable relative to the respective manipulation detecting component during removal of the base member and lid respectively, provides for an enhanced manipulation detection. More precisely, the first protective sleeve 50 is fixed to the wall, the first manipulation detecting device is fixed relative to the base member 10, and the base member 10 in turn, is movable relative to the wall during removal of the base member 10. By this means, even if it would be possible to initially access the free end of the first actuator at an attempt to unauthorized removal of the base member, it would not be possible to maintain contact with said free end during continued removal of the base member. This in turn results in that it is not possible to keep the trigger of the first manipulation detecting component depressed during the removal, whereby it is not possible to avoid actuation of the first manipulation detecting component. Correspondingly, the fixation of the second protective sleeve 60 to the lid 20, which is movable in relation to the second manipulation detection component 42, renders it impossible to maintain the second actuator pressed against the second manipulation detecting device, even if it would initially be possible to access the free end of the second actuator during a manipulation attempt.

Additionally, the fact both protective sleeves extends axially such that they surround entirely the respective actuator and at least partially the respective manipulation detection component, efficiently prevents access to the respective actuator and also to the corresponding manipulation detection components.

Further more the fact that the protective sleeves comprise a base portion exhibiting a contact surface for the free end of the respective actuator, provides for that the free ends of the actuators are arranged at a distance from the wall and the lid respectively. Hereby, access to the free ends by insertion of a thin object along the surface of the wall and the lid respectively is further prevented.

The invention has mainly been described above with reference to a few embodiments. However, as is readily appreciated by a person skilled in the art, other embodiments than the ones disclosed above are equally possible within the scope of the invention, as defined by the appended patent claims. For example, the electronic control unit may be provided with only one manipulation detecting component and a corresponding actuator and protective sleeve. This may be sufficient for example when the cover is not removable from the base member and access to the interior space is made possible only by removal of the base member from the support surface. The cover may e.g. be formed integral, in one piece, with the base member. Such an embodiment may also be useful when the base member is securely fixed to the support surface, such that access to the interior space and removal of the base member from the support surface is made possible only by removal of the lid from the base member. In cases where the electronic control unit comprises additional removable parts allowing access to the interior space, the electronic control unit may be provided with a corresponding number of manipulation detecting components, actuators and protective sleeves. The actuator or actuators may be configured in many different ways and need not to be resilient. E.g. an actuator may be formed as a solid rod, a ball, a cube or the like. In cases where resiliency is desired, a resilient organ may be incorporated in the manipulation detecting component or in the protective sleeve. Alternatively a resilient organ may be arranged between the manipulation detecting component and the actuator or between the act actuator and the protective sleeve. Instead of being constituted by a micro-switch, the manipulation detecting component may comprise or be constituted by any other suitable detecting means such as e.g. a reed switch cooperating with an actuator comprising a magnet or an optical switch cooperating e.g. with an actuator comprising a light source, such as a light emitting diode.

## Claims

1. An electronic control unit comprising a base member (10) which is arranged to be fixed to a support surface in the form of a building wall (3) and a cover or a an openable lid (20) which, together with the base member, encloses an interior space, which space accommodates an electronic control circuit, wherein the electronic control circuit comprises at least one manipulation detecting component (41) which is arranged to generate an electric signal when the base member is removed from the wall and wherein an actuator (43) is arranged between the manipulation detecting component and the wall when the control unit is fixed to the wall, wherein a separate protective sleeve (50) which is arranged to be fixed to the wall and which comprises a sleeve portion (52) which is arranged to surround the actuator (43) and at least a portion of the manipulation detecting component when the base member is fixed to the wall.

2. An electronic control unit according to claim 1, wherein the actuator (43) comprises a first end (43a) arranged in contact with the manipulation detecting component (41) and a second end (43b) being arranged distal to the first end.

3. An electronic control unit according to claim 2, wherein the protective sleeve (50) comprises a sleeve support surface (53) for the second end (43b) of the actuator (43).

4. An electronic control unit according to claim 3, wherein the sleeve portion (52) of the protective sleeve (50) extends from the sleeve support surface (53).

5. An electronic control unit according to any of claims 1-4, wherein the actuator (43) is resilient.

6. An electronic control unit according to claim 5, wherein the actuator (43) is formed of a compression spring.

7. An electronic control unit according to any of claims 1-6, wherein the lid (20) is openable or removable from the base member (10), the electronic control unit comprising a first manipulation detecting component (41), a first protective sleeve (50) which is arranged to be fixed to the wall (3) and a first actuator (43) arranged between the first manipulation detecting component and the first protective sleeve as well as a second manipulation detecting component (42), a second protective sleeve (60) which is fixed to the lid (20) and a second actuator (44) arranged between the second manipulation detection component and the second protective sleeve.

8. An electronic control unit according to any of claims 1-7, wherein the manipulation detection component (41, 42) comprises a micro-switch.

9. An electronic control unit according to claim 7 or 8, wherein the second protective sleeve (60) is formed integral with the lid.

10. An electronic control unit according to any of claims 1-9, comprising a printed circuit board (30) which is fixed to the base member (10) and onto which the manipulation detecting component (41, 42) is attached.

11. An electronic control unit according to any of claims 1-10, wherein the base member (10) comprises a cylindrical flange (16) which extends towards the support surface (3) and which at least partially surrounds the protective sleeve (50) when the base member (10) is fixed to the wall (3).

12. An electronic control system according to any of claims 1-11, wherein the lid (20) is openable by being removed from the base member (10).

13. An electronic control system according to any of claims 1-11, wherein the lid is hinged to the base member.

## Patentansprüche

1. Elektronische Steuereinheit umfassend ein Grundelement (10), welches eingerichtet ist, um an einer Stützfläche in Form einer Gebäudewand (3) fixiert zu werden, und eine Abdeckung oder einen öffnungsfähigen Deckel (20), welche bzw. welcher zusammen mit dem Grundelement einen Innenraum einschließt, wobei der Raum eine elektronische Steuerschaltung aufnimmt, wobei die elektronische Steuerschaltung mindestens ein Manipulationserkennungsbauteil (41) umfasst, welches eingerichtet ist, um ein elektrisches Signal zu erzeugen, wenn das Grundelement von der Wand entfernt wird, und wobei ein Aktuator (43) zwischen dem Manipulationserkennungsbauteil und der Wand angeordnet ist, wenn die Steuereinheit an der Wand fixiert ist, wobei eine separate Schutzhülse (50), welche eingerichtet ist, um an der Wand fixiert zu werden, und welche einen Hülsenabschnitt (52) umfasst, welcher eingerichtet ist, um den Aktuator (43) und mindestens einen Abschnitt des Manipulationserkennungsbauteils zu umgeben, wenn das Grundelement an der Wand fixiert ist.

2. Elektronische Steuereinheit nach Anspruch 1, wobei der Aktuator (43) ein erstes Ende (43a), das in Kontakt mit dem Manipulationserkennungsbauteil (41) angeordnet ist, und ein zweites Ende (43b), das distal zu dem ersten Ende angeordnet ist, umfasst.

3. Elektronische Steuereinheit nach Anspruch 2, wobei die Schutzhülse (50) eine Hülsenstützfläche (53) für das zweite Ende (43b) des Aktuators (43) umfasst.

4. Elektronische Steuereinheit nach Anspruch 3, wobei sich der Hülsenabschnitt (52) der Schutzhülse (50) von der Hülsenstützfläche (53) erstreckt.

5. Elektronische Steuereinheit nach einem der Ansprüche 1-4, wobei der Aktuator (43) federnd ist.

6. Elektronische Steuereinheit nach Anspruch 5, wobei der Aktuator (43) aus einer Druckfeder gebildet ist.

7. Elektronische Steuereinheit nach einem der Ansprüche 1-6, wobei der Deckel (20) öffnungsfähig oder von dem Grundelement (10) entfernbar ist, wobei die elektronische Steuereinheit ein erstes Manipulationserkennungsbauteil (41), eine erste Schutzhülse (50), welche eingerichtet ist, um an der Wand (3) fixiert zu werden, und einen ersten Aktuator (43), der zwischen dem ersten Manipulationserkennungsbauteil und der ersten Schutzhülse angeordnet ist, sowie ein zweites Manipulationserkennungsbauteil (42), eine zweite Schutzhülse (60), welche an dem Deckel (20) fixiert ist, und einen zweiten Aktuator (44), der zwischen dem zweiten Manipulationserkennungsbauteil und der zweiten Schutzhülse angeordnet ist, umfasst.

8. Elektronische Steuereinheit nach einem der Ansprüche 1-7, wobei das Manipulationserkennungsbauteil (41, 42) einen Mikroschalter umfasst.

9. Elektronische Steuereinheit nach Anspruch 7 oder 8, wobei die zweite Schutzhülse (60) einstückig mit dem Deckel gebildet ist.

10. Elektronische Steuereinheit nach einem der Ansprüche 1-9, umfassend eine Leiterplatte (30), welche an dem Grundelement (10) fixiert ist, und auf welcher das Manipulationserkennungsbauteil (41, 42) befestigt ist.

11. Elektronische Steuereinheit nach einem der Ansprüche 1-10, wobei das Grundelement (10) einen zylinderförmigen Flansch (16) umfasst, welcher sich zu der Stützfläche (3) erstreckt und welcher mindestens teilweise die Schutzhülse (50) umgibt, wenn das Grundelement (10) an der Wand (3) fixiert ist.

12. Elektronisches Steuersystem nach einem der Ansprüche 1-11, wobei der Deckel (20) geöffnet werden kann, indem er von dem Grundelement (10) entfernt wird.

13. Elektronisches Steuersystem nach einem der Ansprüche 1-11, wobei der Deckel an dem Grundelement angelenkt ist.

## Revendications

1. Unité de commande électronique comprenant un élément de base (10) étudié pour être fixé sur une surface de support sous la forme d'un mur de bâtiment (3) et un couvercle ou couvercle ouvrable (20) lequel, ensemble avec l'élément de base, enferme un espace intérieur, lequel espace héberge un circuit de commande électronique, dans laquelle le circuit de commande électronique comprend au moins un composant de détection de manipulation (41) qui est étudié pour générer un signal électrique lorsque l'élément de base est retiré du mur et dans laquelle un actionneur (43) est disposé entre le composant de détection de manipulation et le mur lorsque l'unité de commande est fixée au mur, dans laquelle un manchon de protection (50) distinct est étudié pour être fixé au mur et comprend une partie de manchon (52) qui est disposée pour entourer l'actionneur (43) et au moins une partie du composant de détection de manipulation lorsque l'élément de base est fixé au mur.

2. Unité de commande électronique selon la revendication 1, dans laquelle l'actionneur (43) comprend une première extrémité (43a) disposée en contact avec le composant de détection de manipulation (41) et une deuxième extrémité (43b) disposée de manière distale par rapport à la première extrémité.

3. Unité de commande électronique selon la revendication 2, dans laquelle le manchon de protection (50) comprend une surface de support de manchon (53) pour la deuxième extrémité (43b) de l'actionneur (43).

4. Unité de commande électronique selon la revendication 3, dans laquelle la partie de manchon (52) du manchon de protection (50) s'étend à partir de la surface de support de manchon (53).

5. Unité de commande électronique selon l'une quelconque des revendications 1-4, dans laquelle l'actionneur (43) est élastique.

6. Unité de commande électronique selon la revendication 5, dans laquelle l'actionneur (43) est formé par un ressort de pression.

7. Unité de commande électronique selon l'une quelconque des revendications 1-6, dans laquelle le couvercle (20) est ouvrable ou retirable de l'élément de base (10), l'unité de commande électronique comprenant un premier composant de détection de manipulation (41), un premier manchon de protection (50) qui est étudié pour être fixé au mur (3) et un premier actionneur (43) disposé entre le premier composant de détection de manipulation et le premier manchon de protection, ainsi qu'un deuxième composant de détection de manipulation (42), un deuxième manchon de protection (60) qui est fixé au couvercle (20) et un deuxième actionneur (44) disposé entre le deuxième composant de détection de manipulation et le deuxième manchon de protection.

8. Unité de commande électronique selon l'une quelconque des revendications 1-7, dans laquelle le composant de détection de manipulation (41, 42) comprend un microrupteur.

9. Unité de commande électronique selon la revendication 7 ou 8, dans laquelle le deuxième manchon de protection (60) est formé d'un seul tenant avec le couvercle.

10. Unité de commande électronique selon l'une quelconque des revendications 1-9, comprenant une carte de circuit imprimé (30) qui est fixée à l'élément de base (10) et à laquelle le composant de détection de manipulation (41, 42) est fixé.

11. Unité de commande électronique selon l'une quelconque des revendications 1-10, dans laquelle l'élément de base (10) comprend une bride cylindrique (16) qui s'étend vers la surface de support (3) et qui entoure au moins partiellement le manchon de protection (50) lorsque l'élément de base (10) est fixé au mur (3).

12. Système de commande électronique selon l'une quelconque des revendications 1-11, dans lequel le couvercle (20) est ouvrable en étant retiré de l'élément de base (10).

13. Système de commande électronique selon l'une quelconque des revendications 1-11, dans lequel le couvercle est articulé par rapport à l'élément de base.
